# EUROPEAN PATENT APPLICATION

(11) **EP 4 725 724 A2**
(43) Date of publication of application: **15.04.2026**
(21) Application number: 25206739.2
(22) Date of filing: 03.10.2025
(51) Int. Cl.: B60G 17/0185, B60G 17/019, G01M 17/04, B60B 7/00

(54) **VEHICLE CHASSIS STATUS DETECTING SYSTEM**

(30) Priority: 08.10.2024 TW 113138307
(71) Applicant: Shin Ruei Intelligent Vehicle Technology CO., Ltd., Taipei City, 104051 (TW)
(72) Inventor: Wu, Hung-Chuan, 326016 Taoyuan City (TW)
(74) Representative: Lang, Christian

(57) **Abstract**

A vehicle chassis status detecting system includes a first and a second detecting device. The first detecting device is disposed at the center of the rim cover. The first detecting device obtains the first acceleration data of the tire structure and includes a first transmission module. The second detecting device is disposed in the chassis body. The second detecting device includes a second accelerometer and a second transmission module. The second transmission module is connected to the first transmission module. The second detecting device uses the second accelerometer to obtain a second acceleration data of the chassis body. The second detecting device compares the second acceleration data with the first acceleration data to obtain an acceleration difference value and compares the acceleration difference value with a predetermined acceleration threshold to generate a shock absorber signal, a vehicle width gap signal and/or a vehicle length gap signal.

## Description

### BACKGROUND OF THE INVENTION

### (a) Field of the Invention

The present disclosure relates to the detecting field of the vehicle status, and in particular, relates to a vehicle chassis status detecting system 1000 and a detecting method. Especially, the system is used to detect whether the suspension module (such as shock absorber 130) is operating normally when the car is running and is used to detect whether the position of the non-rim structure of the chassis system or the gap between elements of the rim structure T is normal to detect the change of the vehicle status.

### (b) Description of the Prior Art

In general, the state of the vehicle is constantly changing while driving. The vehicle status is relevant to whether the position of the non-rim structure of the chassis system or the gap between elements of the rim structure is normal or not.

Shock absorbers are an important to the suspension system. The function of the shock absorber is to absorb the impact of vibration and deformation when the spring rebounds and is to absorb the impact of the road surface. The shock absorbers are important to the suspension system. When passing through an uneven road surface, although the shock-absorbing spring can absorb the vibration of the road surface, the spring itself will still jump back and forth, and the shock absorber is used to suppress this jump of the spring. Therefore, the performance or aging failure of the shock absorbers will directly affect the ride comfort, the maneuverability of the vehicle and the safety of the passengers. However, as mileage accumulates, the consumption and the failure of the shock absorber are inevitable. Therefore, how to detect and replace the shock absorbers in a timely manner will be an issue. Similarly, as mileage accumulates, it is also necessary to timely detect whether the position of the non-rim structure of the chassis system or the gap between elements of the rim structure is normal to ensure the safety and the comfort of driving.

For example, although the regular maintenance allows inspectors to test or replace accessories (such as shock absorbers or other chassis components), this method cannot fully ensure the safety of driving on the road before the maintenance. For example, these accessories may be damaged prematurely for various reasons. Or, unnecessary waste may result from regular replacement of these accessories, which may make a burden on consumers. Or, the driver may forget to maintain the vehicle. The above reasons show various problems currently. In addition, regarding the detection of the vehicle shock absorbers or the detection of the gap between chassis components, it usually requires experienced inspectors to manually shake the vehicle and determine whether the gap between the components of the shock absorber or chassis is normal or not by their experience. However, this manual detecting method is not objective, and the result will be different from different people, so it may easily lead to misjudgment. In addition, abnormalities in shock absorbers or other chassis components can only be discovered during the regular maintenance or when the abnormalities occur. Therefore, the driver cannot know the condition of the vehicle at any time, which affects the safety and comfort of driving.

Related Document 1 (such as Taiwan Invention Patent Publication No. TW202019733) is equipped with a sensor (such as a gyroscope), a position sensor or an acceleration sensor on the shock absorber or suspension control arm. However, Document 1 uses two sensors to sense the height position or height change of the two wheels and to transmit this information to the controller to calculate the height difference between the two wheels. The anti-roll bar device is driven by the controller to reduce the vibration of the vehicle body when driving on uneven roads, so as to stabilize the vehicle body and reduce the discomfort when the vehicle is driving on bumpy roads. In other words, Document 1 cannot discover whether the shock absorbers are normal or not or whether the gaps between the components of the chassis are normal or not. When the components of the shock absorber or chassis need to be replaced, the undamaged sensors must also be replaced, which may cause the waste of the sensors.

In summary, a vehicle detecting system and detecting method that can automatically detect the vehicle status at any time to detect vehicle accessories (such as the gap between shock absorbers or chassis components and tire structures) and notify the driver for car maintenance when it is necessary.

### SUMMARY OF THE INVENTION

One aspect of the present disclosure is to provide a vehicle chassis status detecting system (or vehicle condition detecting system) and a detecting method of the vehicle condition. The driver can know the condition of the vehicle at any time. Even if the detecting device of the vehicle chassis condition detecting system and the detecting method of the vehicle condition is not disposed at the suspension system (such as shock absorbers), the system and the method are able to detect and determine whether the suspension system (such as shock absorbers) is operating normally. The system and the method also can detect and determine whether the position of the non-rim structure of the chassis system or the gap between elements of the rim structure is normal. When the shock absorber is required to be replaced, it is not necessary to replace the undamaged detecting device at the same time, which may avoid the waste of the detecting device.

According to an embodiment of the present disclosure, a vehicle chassis status detecting system is used for an automobile. A chassis system of the automobile includes a chassis body and a tire structure, the tire structure is connected to an axle of the chassis body, the axle of the chassis body is disposed above the chassis body. One end of the axle is connected to the chassis body, a rim of the tire structure is disposed at another end of the axle, an outer peripheral surface of the rim is combined with a tire to form the tire structure, a central hole is located at a center of the rim and a rim cover disposed in the central hole of the center of the rim, the rim cover is rotated synchronously with the rotation of the rim or the tire, a shock absorber of the chassis body is connected to the axle, and the vehicle chassis status detecting system includes a first detecting device and a second detecting device. The first detecting device is disposed at a rim cover center position of the rim cover of the tire structure. The first detecting device includes a first accelerometer and a first transmission module, the first accelerometer is electrically coupled to the first transmission module, and the first detecting device is configured to use the first accelerometer to obtain a first acceleration data of the tire structure. The second detecting device is disposed in the chassis body. The second detecting device includes a second accelerometer and a second transmission module, the second transmission module is electrically coupled to the second accelerometer and is communicatively connected to the first transmission module, and the second detecting device is configured to use the second accelerometer to obtain a second acceleration data of the chassis body. The first acceleration data is transmitted to the second transmission module through the first transmission module, the second detecting device is configured to compare the second acceleration data with the first acceleration data at the same time-interval to obtain an acceleration difference value, and the acceleration difference value is compared with a predetermined acceleration threshold to generate a shock absorber signal, a vehicle width gap signal, and/or a vehicle length gap signal.

According to an embodiment of the present disclosure, a vehicle chassis status detecting system is used for an automobile. A chassis system of the automobile includes a chassis body and a tire structure, the tire structure is connected to an axle of the chassis body, the axle of the chassis body is disposed above the chassis body. One end of the axle is connected to the chassis body, a rim of the tire structure is disposed at another end of the axle, an outer peripheral surface of the rim is combined with a tire to form the tire structure, a central hole is located at a center of the rim and a rim cover disposed in the central hole of the center of the rim, the rim cover is rotated synchronously with the rotation of the rim or the tire, a shock absorber of the chassis body is connected to the axle, and the vehicle chassis status detecting system includes a first detecting device, a second detecting device and a data center. The first detecting device is disposed at a rim cover center position of the rim cover of the tire structure. The first detecting device includes a first accelerometer and a first transmission module, the first accelerometer is electrically coupled to the first transmission module, and the first detecting device is configured to use the first accelerometer to obtain a first acceleration data of the tire structure. The second detecting device is disposed in the chassis body. The second detecting device includes a second accelerometer and a second transmission module, the second transmission module is electrically coupled to the second accelerometer and is communicatively connected to the first transmission module, and the second detecting device is configured to use the second accelerometer to obtain a second acceleration data of the chassis body. The data center includes a third communicating module. The third communicating module is communicatively connected to the second transmission module to receive a detecting data from the second detecting device, the detecting data comprises the first acceleration data and the second acceleration data, a computing module is coupled to the third communicating module, and the computing module is configured to process the detecting data. The computing module compares the second acceleration data with the first acceleration data at the same time-interval to obtain an acceleration difference value and compares the acceleration difference value with a predetermined acceleration threshold to generate a shock absorber signal, a vehicle width gap signal, and/or a vehicle length gap signal.

According to an embodiment of the present disclosure, a vehicle chassis status detecting system includes a first detecting device, a second detecting device and a data center. The first detecting device is disposed in corresponding one of a plurality of the rim covers of a vehicle. The first detecting device includes a first transmission module and a first accelerator. The first accelerometer is coupled to the first transmission module and configured to obtain a first acceleration data corresponding to the one of the rim covers. The second detecting device is disposed at the center of the vehicle. The second detecting device includes a second accelerometer and a second transmission module. The second accelerometer is configured to obtain a second acceleration data corresponding to the center. The second transmission module is coupled to the second accelerometer and is communicatively connected to the first transmission module. The second transmission module is configured to transmit a detecting data, and the detecting data is associated with the first acceleration data and the second acceleration data. The data center is configured to receive the detecting data to generate a calculating result based on the detecting data, and the data center is configured to broadcast a vehicle condition to a user end based on the calculating result.

According to another embodiment of the present disclosure, a vehicle chassis status detecting system includes a first detecting device, a second detecting device and a processing module. The first detecting device is disposed in corresponding one of a plurality of the rim covers of a vehicle. The first detecting device includes a first transmission module and a first accelerator. The first accelerometer is coupled to the first transmission module and configured to obtain a first acceleration data corresponding to the one of the rim covers. The second detecting device is disposed at the center of the vehicle. The second detecting device includes a second accelerometer and a second transmission module. The second accelerometer is configured to obtain a second acceleration data corresponding to the center. The second transmission module is coupled to the second accelerometer and is communicatively connected to the first transmission module. The processing module is coupled to the second transmission module and configured to generate a vehicle condition based on the first acceleration data and the second acceleration data.

According to another embodiment of the present disclosure, a vehicle condition detecting method includes: disposing a first detecting device in corresponding one of a plurality of the rim covers of a vehicle and disposing a second detecting device at the center of the vehicle; obtaining a first acceleration data corresponding to the one of the rim covers by the first detecting device; obtaining a second acceleration data corresponding to the center by the second detecting device; generating a detecting data based on the first acceleration data and the second acceleration data; and transmitting the detecting data to a data center, generating a calculating result based on the detecting data by the data center and broadcasting a vehicle condition to a user end based on the calculating result.

According to another embodiment of the present disclosure, a vehicle condition detecting method includes: disposing a first detecting device in corresponding one of a plurality of the rim covers of a vehicle and disposing a second detecting device at the center of the vehicle; obtaining a first acceleration data corresponding to the one of the rim covers by the first detecting device; obtaining a second acceleration data corresponding to the center by the second detecting device; and generating a calculating result based on the first acceleration data and the second acceleration data and broadcasting a vehicle condition based on the calculating result.

In summary, the present disclosure detects acceleration changes of the rim, the tire, the tire structure or the rim cover relative to the chassis body to determine whether vehicle components or consumables need to be replaced or not. For example, when the calculating result shows that the acceleration changes of the rim, the tire, the tire structure or the rim cover are abnormal, it is likely that there is a problem with the performance of the shock absorbers, or there is a problem between the chassis body and the tire structure. The size of the gap between the chassis is abnormal and the chassis components may need to be adjusted or replaced. So, the user may receive a notification to arrange for a repair and maintenance inspection. In this way, if the vehicle accessories are damaged, the driver is able to receive the notification beforehand and does not have to wait until the scheduled maintenance date to replace the damaged accessories. Therefore, the present disclosure can improve driving safety on the road.

### BRIEF DESCRIPTION OF THE DRAWINGS

FIG. 1A illustrates a schematic view of a vehicle chassis status detecting system according to one embodiment of the present disclosure.
FIG. 1B illustrates a structure schematic view of a vehicle chassis status detecting system according to one embodiment of the present disclosure.
FIG. 2 illustrates a schematic view that the first detecting device and the second detecting device in FIG. 1A are communicating.
FIG. 3 illustrates a schematic view of a vehicle chassis status detecting system according to another embodiment of the present disclosure.
FIG. 4A illustrates a schematic view that the first detecting device detects an acceleration according to one embodiment of the present disclosure.
FIG. 4B illustrates a schematic view that the second detecting device detects an acceleration according to one embodiment of the present disclosure.
FIG. 5 illustrates a flow chart of a vehicle condition detecting method according to one embodiment of the present disclosure.
FIG. 6 illustrates a flow chart of a vehicle condition detecting method according to another embodiment of the present disclosure.

### DETAILED DESCRIPTION OF THE PREFERRED EMBODIMENTS

The present disclosure is particularly described with the following examples. These examples are only used for illustration. For those people who have ordinary skills in the art, various modifications may be made without departing from the spirit and scope of the present disclosure. Therefore, the protective scope of this present disclosure shall be subject to the scope of the claims.

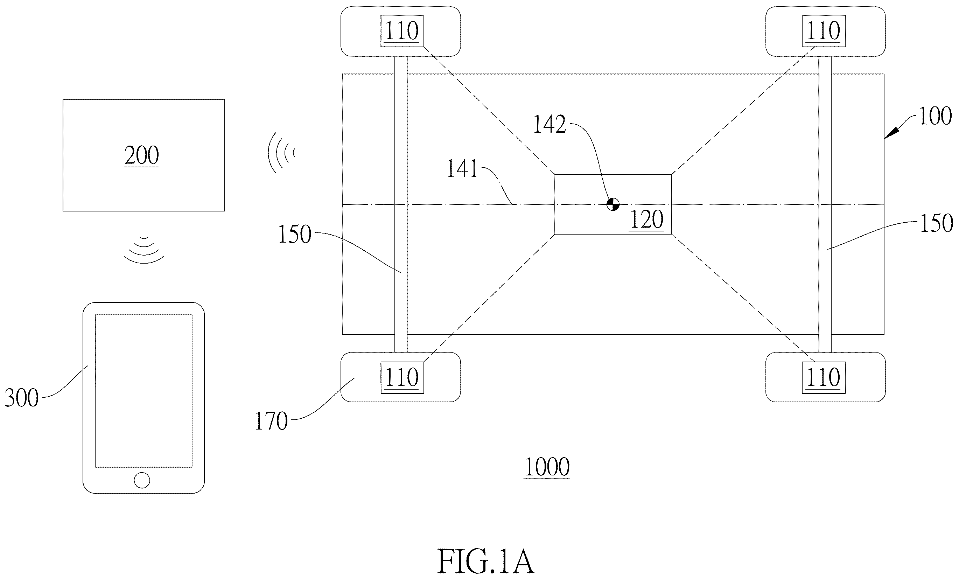

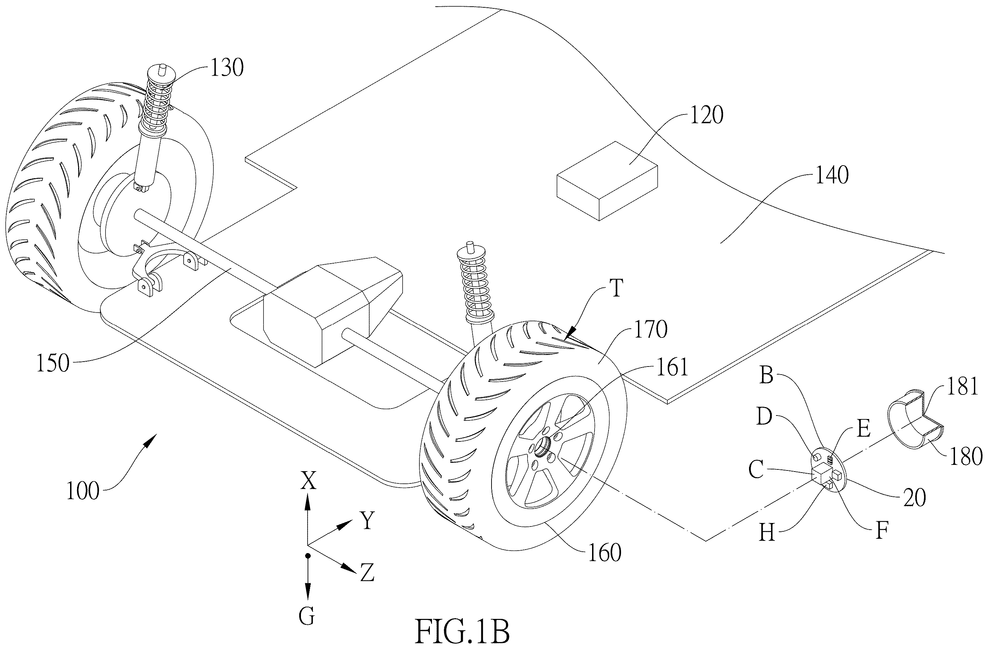

Please refer to FIG. 1A and FIG. 1B, FIG. 1A illustrates a schematic view of a vehicle chassis status detecting system 1000 according to one embodiment of the present disclosure, and FIG. 1B illustrates a structure schematic view of a vehicle chassis status detecting system 1000 according to one embodiment of the present disclosure. As shown in FIG. 1A and FIG. 1B, The vehicle chassis status detecting system 1000 includes a first detecting device 110, a second detecting device 120 and a data center 200. The second detecting device 120 and the data center 200 are communicated by the wireless communication to transmit data. The first detecting device 110 and the second detecting device 120 are communicated by the wireless communication to transmit data. The wireless communication includes Wi-Fi, Bluetooth, wireless radio frequency or near field communication. The first detecting device 110 and the second detecting device 120 are disposed in a vehicle 100. The data center 200 may be a cloud platform, a server at the car factory, a computer device, a vehicle-mounted calculator, or even a portable computer device (such as a smartphone or tablet). The vehicle 100 is described as a four-wheel car, but it is not limited in this regard. For example, the vehicle 100 may have more than four tires, rims, rim covers, and rim structures. The vehicle 100 may also have less than four tires, rims, rim covers, and rim structures. A chassis system of the vehicle 100 includes a chassis body 140 and a tire structure T. The tire structure T is connected to an axle 150 of the chassis body 140. The axle 150 of the chassis body 140 is disposed above the chassis body 140 and one end of the axle 150 is connected to the chassis body 140. A rim 160 of the tire structure T is disposed at another end of the axle 150, and the outer peripheral surface of the rim 160 is combined with a tire 170 to form the tire structure T. A central hole 161 is located at the center of the rim 160. A rim cover 180 is disposed or set in the central hole 161 in the center of the rim 160, the rim cover 180 rotated synchronously with the rotation of the rim 160 or the tire 170. A shock absorber 130 of the chassis body 140 is connected to the axle 150. In other words, the chassis system may include the shock absorber 130 , the chassis body 140, the axle 150, the rim 160, the tire 170, the rim cover 180 above-mentioned, and some components recognized by the person who has ordinary skill in the art. In general, the chassis body 140 may refer to the assembly of the components in the chassis system except the tire structure T. In this embodiment, the first detecting device 110 may be installed or disposed at a rim cover center position 181 of the rim cover 180 of the rim structure T to detect the rim 160, the tire 170, an acceleration data of the tire structure T or the rim cover 180 in a gravity-related direction, the vehicle width direction and/or the vehicle length direction. The rim cover center position 181 of the rim cover 180 corresponds to the axis of the axle 150. In addition, the second detecting device 120 may be disposed on the chassis system of the vehicle 100, and the second detecting device 120 is not disposed on the tire structure T or the shock absorber 130. The detecting device 120 can be disposed at any position of the chassis body 140 of the vehicle 100 to detect the acceleration data of the chassis body 140 in the gravity-related direction, the vehicle width direction and/or the vehicle length direction. The detecting device 120 is preferably located at a chassis central axis 141 of chassis body 140. The detecting device 120 is best located at a chassis center position 142 on the chassis central axis 141 of the chassis body 140. Therefore, the first detecting device 110 and the second detecting device 120 each include an accelerometer. Specifically, the aforementioned gravity-related direction is the gravity direction G and the opposite direction of gravity direction G. The opposite direction of gravity direction G is the opposite direction to the gravity direction G. In addition, a first reference axis X is the direction from the bottom to the roof of the vehicle. The first reference axis X is the gravity-related direction as well. A second reference axis Y is the vehicle length direction. A third reference axis Z is the vehicle width direction. The first reference axis X, the second reference axis Y and the third reference axis Z are perpendicular to each other.

In one embodiment, the first detecting device 110 and the second detecting device 120 each include a circuit board B, a sensor C, a processor D, a wireless transceiver unit E, a power supply unit F and a memory unit H. The sensor C, the processor D, the wireless transceiver unit E, the power supply unit F and the memory unit H are disposed on the circuit board B. The sensor C, the wireless transceiver unit E, the power supply unit F and the memory unit H are electrically connected to the processor D. The two power supply units F respectively provide the power to the first detecting device 110 and the second detecting device 120. The two memory units H respectively stores firmware required by the two processors D for calculation or data transmission. The two power supply units F can be button batteries or rechargeable lithium batteries. The sensor C includes an accelerometer of a micro-electromechanical system. The accelerometer can be called as an acceleration sensor, and the accelerometer can be a gravity accelerometer. The accelerometer can detect acceleration on three measurement axes as measurement data. The accelerometer is a three-axis accelerometer. The three-axis accelerometer aligns the three measurement axes in the gravity-related direction, the vehicle width direction and the vehicle length direction respectively. The gravity-related direction, the vehicle width direction and the vehicle length direction are perpendicular to each other. The measurement data is sent to the processor D. The processor D includes a computing unit. The computing unit calculates the measurement data according to the established algorithm to obtain acceleration data in the gravity-related direction, acceleration data in the vehicle width direction, and acceleration data in the vehicle length direction.

In one embodiment, the first detecting device 110 obtains a first acceleration data. The first acceleration data includes acceleration data in a first gravity-related direction, acceleration data in a first vehicle width direction, and/or a first vehicle length direction of the first detecting device 110. The second detecting device 120 obtains a second acceleration data. The second acceleration data includes acceleration data in a second gravity-related direction, acceleration data in a second vehicle width direction, and /or a second vehicle length direction of the second detecting device 120. Specifically, the first detecting device 110 and/or the second detecting device 120 can integrate the first acceleration data and/or the second acceleration data to obtain a first speed data, a second speed data, a first displacement data and a second displacement data. Therefore, the first speed data may include speed data in the first gravity-related direction, speed data in the first vehicle width direction, and/or speed data in the first vehicle length direction. The second speed data may include a speed data in the second gravity-related direction, a speed data in the second vehicle width direction, and/or a speed data in the second vehicle length direction. The first displacement data may include a displacement data in the first gravity-related direction, a displacement data in the first vehicle width direction and/or a displacement data in the first vehicle length direction. The second displacement data may include a displacement data in the second gravity-related direction, a displacement data in the second vehicle width direction and /or a displacement data in the second vehicle length direction. The first acceleration data, the first speed data and/or the first displacement data obtained by the first detecting device 110 are transmitted through the wireless transceiver unit (or a first transmission module described below) of the first detecting device 110 to another wireless transceiver unit (or a second transmission module described below) of the second detecting device 120. The second detecting device 120 compares the second acceleration data, the second speed data and/or the second displacement data respectively with the first acceleration data, the first speed data and/or the first displacement data at the same time-interval to obtain an acceleration difference value, a speed difference value and/or a displacement difference value. The acceleration difference value, the speed difference value and/or the displacement difference value are respectively compared with a predetermined acceleration threshold, a predetermined speed threshold and/or a predetermined displacement threshold to generate a shock absorber signal, a vehicle width gap signal and/or a vehicle length gap signal. The aforementioned time-interval may be 1/2700 second. That is, the first detecting device 110 and the second detecting device 120 continuously obtain the first acceleration data and the second acceleration data in every 1/2700 second. data. The same time-interval refers to the interval formed by the same starting time and the same ending time.

In one embodiment, the second detecting device 120 respectively compares the acceleration data in the first gravity-related direction, the speed data in the first gravity-related direction, and/or the displacement data in the first gravity-related direction with the acceleration data in the second gravity-related direction, the speed data in the second gravity-related direction, and/or the displacement data in the second gravity-related direction at the same time-interval to obtain an acceleration difference value in the gravity-related direction and a speed difference value in the gravity-related direction and/or a displacement difference value in the gravity-related direction. When the acceleration difference value in the gravity-related direction, the speed difference value in the gravity-related direction, and/or the displacement difference value in the gravity-related direction are respectively greater than a predetermined acceleration threshold in the gravity-related direction, a predetermined speed threshold in the gravity-related direction, and/or a predetermined displacement threshold in the gravity-related direction, the shock absorber 130 is determined not to be operated properly and an abnormal signal of the shock absorber signal is generated. When the acceleration difference value of the gravity-related direction are less than or equal to the predetermined acceleration threshold of the gravity-related direction, the shock absorber 130 is determined to be operated properly and a normal signal of the shock absorber signal is generated.

Similarly, the second detecting device 120 compares the acceleration data in the first vehicle width direction, the speed data in the first vehicle width direction, and/or the displacement data in the first vehicle width direction with the acceleration data in the second vehicle width direction, the speed data in the second vehicle width direction, and/or the displacement data in the second vehicle width direction at the same time-interval to obtain an acceleration difference value in a vehicle width direction, a speed difference value in the vehicle width direction, and/or a displacement difference value in the vehicle width direction. When the acceleration difference value in the vehicle width direction, the speed difference value in the vehicle width direction, and/or the displacement difference value in the vehicle width direction are greater than a predetermined acceleration threshold in the vehicle width direction, a predetermined speed threshold in the vehicle width direction, and/or a predetermined displacement threshold in the vehicle width direction, a width gap between the chassis body 140 and the tire structure T is determined too large and an abnormal signal of the vehicle width gap signal is generated. When the acceleration difference value in the vehicle width direction, the speed difference value in the vehicle width direction, and/or the displacement difference value in the vehicle width direction are less than or equal to the predetermined acceleration threshold in the vehicle width direction, the predetermined speed threshold in the vehicle width direction, and/or the predetermined displacement threshold in the vehicle width direction, the width gap between the chassis body 140 and the tire structure T is determined within an allowable range and a normal signal of the vehicle width gap signal is generated.

Similarly, the second detecting device 120 respectively compares the acceleration data in the first vehicle length direction, the speed data in the first vehicle length direction, and/or the displacement data in the first vehicle length direction with the acceleration data in the second vehicle length direction, the speed data in the second vehicle length direction, and/or the displacement data in the second vehicle length direction at the same time-interval to obtain an acceleration difference value in a vehicle length direction, a speed difference value in the vehicle length direction, and/or a displacement difference value in the vehicle length direction. When the acceleration difference value in the vehicle length direction, the speed difference value in the vehicle length direction, and/or the displacement difference value in the vehicle length direction are greater than a predetermined acceleration threshold in the vehicle length direction, a predetermined speed threshold in the vehicle length direction, and/or a predetermined displacement threshold in the vehicle length direction, a length gap between the chassis body 140 and the tire structure T is determined too large and an abnormal signal of the vehicle length gap signal is generated. When the acceleration difference value in the vehicle length direction, the speed difference value in the vehicle length direction, and/or the displacement difference value in the vehicle length direction are less than or equal to the predetermined acceleration threshold in the vehicle length direction, the predetermined speed threshold in the vehicle length direction, and/or the predetermined displacement threshold in the vehicle length direction, the length gap between the chassis body 140 and the tire structure T is determined within an allowable range and a normal signal of the vehicle length gap signal is generated.

The abnormal signal from the shock absorber indicates some problems with the performance of the shock absorber, which may require to adjust or replace the shock absorber. The shock absorber abnormal signal, vehicle width gap abnormal signal and vehicle length gap abnormal signal indicate that the gap size between the chassis body and the tire structure of the vehicle is abnormal, and chassis components may need to be adjusted or replaced. The normal signal of the shock absorber, the normal signal of the vehicle width gap and the normal signal of the vehicle length gap indicate that the shock absorbers are normal and the gap between the chassis body and the tire structure is also normal, that is, the vehicle is in good condition.

Next, another wireless transceiver unit of the second detecting device 120 transmits the shock absorber abnormal signal, the shock absorber normal signal, the vehicle width gap abnormal signal, the vehicle width gap normal signal, the vehicle length gap abnormal signal and/or the vehicle length gap normal signal to the data center 200 and/or a user end 300.

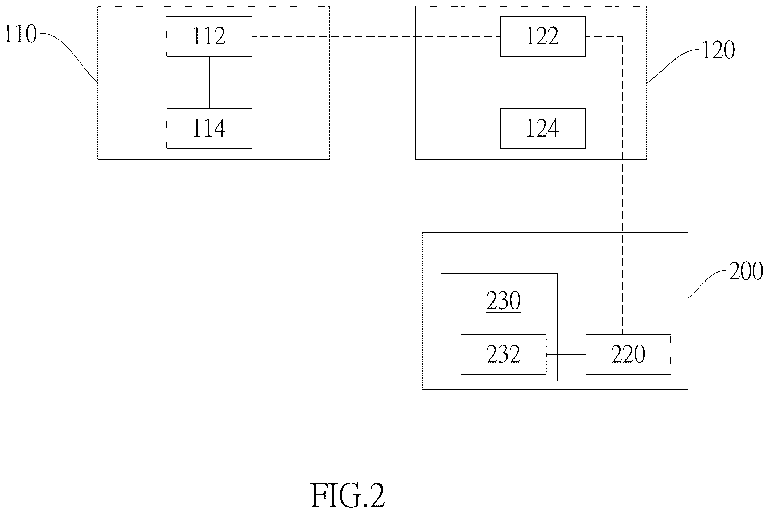

In another embodiment, the first acceleration data obtained by the first detecting device 110 is transmitted to the data center 200 through a wireless transceiver unit, and the second acceleration data obtained by the second detecting device 120 is transmitted to the data center 200 through another wireless transceiver unit. The difference from the previous embodiment is that a computing module 230 (see FIG. 2) of the data center 200 can integrate the first acceleration data and/or the second acceleration data to obtain the first speed data, the second speed data, the first displacement data, and the second displacement data. Similarly, the computing module 230 of the data center 200 respectively compares the second acceleration data, the second speed data and/or the second displacement data with the first acceleration data, the first speed data and/or the first displacement data at the same time interval, which is not performed by the second detecting device 120.

For the sake of the explanation, the acceleration data is used as an example below. However, the same principle can be extended to the example of the speed data and the displacement data, so the speed data and the displacement data will not be described below in detail. Please refer to FIG. 2, FIG. 2 illustrates a schematic view that the first detecting device 100 and the second detecting device 120 in FIG. 1A are communicating. As shown in FIG. 2, the first detecting devices 110 includes a first transmission module 112 and a first accelerometer 114. The first accelerometer 114 is electrically coupled to the first transmission module 112, and the first detecting device 110 uses the first accelerometer 114 to correspondingly obtain the first acceleration data of the tire structure T. The second detecting device 120 is disposed at the chassis center position 142, and the second detecting device 120 includes a second accelerometer 124 and a second transmission module 122. The second detecting device 120 uses the second accelerometer 124 to obtain the second acceleration data corresponding to the chassis center position 142. The second transmission module 122 is electrically coupled to the second accelerometer 124 and is communicatively connected to the first transmission module 112 for transmitting the detecting data. The detecting data is associated with the first acceleration data and the second acceleration data, such as the first acceleration data, the second acceleration data, the first speed data, the second speed data, the first displacement data and/or the second displacement data. The data center 200 receives the detecting data and generates a calculating result based on the detecting data. The data center 200 broadcasts a vehicle condition message to the user end 300 based on the calculating result. The calculating result can also be the shock absorber abnormal signal, the shock absorber normal signal, the vehicle width gap abnormal signal, the vehicle width gap normal signal, the vehicle length gap abnormal signal and/or the vehicle length gap normal signal. For example, the user end 300 may include an email, a social software account, a mobile phone number and an application, and the vehicle condition message may be an email, a text message, a voice file, a sound and light effect, or a vibration effect.

According to an embodiment of the present disclosure, the first acceleration data and the second acceleration data include the three-axis data. According to another embodiment of the present disclosure, the first detecting device 110 and the second detecting device 120 may further include a gyroscope of a micro-electromechanical system (not shown). It is noted that the acceleration data can be replaced with the speed data or the displacement data. Or the detected acceleration data can be converted into the speed data or the displacement data.

According to an embodiment of the present disclosure, the data center 200 includes a third communicating module 220. The third communicating module 220 is connected to the second transmission module 122 to receive signals from the second detecting device 120. The detecting data may include the first acceleration data and the second acceleration data. Furthermore, the detecting data can also be the subtraction result of the first acceleration data and the second acceleration data, which can detect whether an acceleration deviation, speed deviation or displacement deviation (such as the shock absorber abnormal signal, the shock absorber normal signal, the vehicle width Abnormal gap signal, normal vehicle width gap signal, abnormal vehicle length gap signal and/or normal vehicle length gap signal) occurs at a certain point on the tire structure T compared to the chassis center position 142. It can determine whether the shock absorber or the component between the chassis body and the rim structure of the vehicle 100 need to be inspected, maintained, or replaced. The calculating result may be associated with the status of a component corresponding to the vehicle 100, and the vehicle condition message may be associated with whether to perform inspection on this component. Optionally, this component may include the shock absorbers and other elements forming the chassis.

The computing module 230 is coupled to the third communicating module 220 for processing the detecting data. According to a preferred embodiment of the present disclosure, the computing module 230 includes an artificial intelligence computing unit 232 that performs training based on vehicle driving data. The vehicle driving data may be statistical data of a predetermined driving number of a specific car in a specific venue. After the training is completed, the artificial intelligence computing unit 232 generates a training result, which can automatically detect a new acceleration data (such as the first acceleration data and/or the second acceleration data of the first detecting device 110 and/or the second detecting device 120) is abnormal or not. For example, the artificial intelligence computing unit 232 can use a neural algorithm for training, and during the training process, a plurality of measured data of special runways can be used. The special runways can be divided into flat roads, rough roads, and hilly roads.

In another embodiment, the computing module 230 can compare the detecting data with an original acceleration data to generate a computing result. The artificial intelligence computing unit 232 may not be used or may be used in this method. The artificial intelligence computing unit 232 calculates the original acceleration data in advance.

Therefore, the predetermined acceleration threshold in the gravity-related direction, the predetermined speed threshold in the gravity-related direction, the predetermined displacement threshold in the gravity-related direction, the predetermined acceleration threshold in the vehicle width direction, the predetermined speed threshold in the vehicle width direction, predetermined displacement threshold in the vehicle width direction, the predetermined acceleration threshold in the vehicle length direction, the predetermined speed threshold in the vehicle length direction, and/or the displacement threshold in the vehicle length direction may be provided by the original manufacturer of a specific vehicle model or may be provided by the artificial intelligence computing unit 232 according to the aforementioned training result obtained from the vehicle driving data of the statistical data of the predetermined driving number of the specific car in the specific venue.

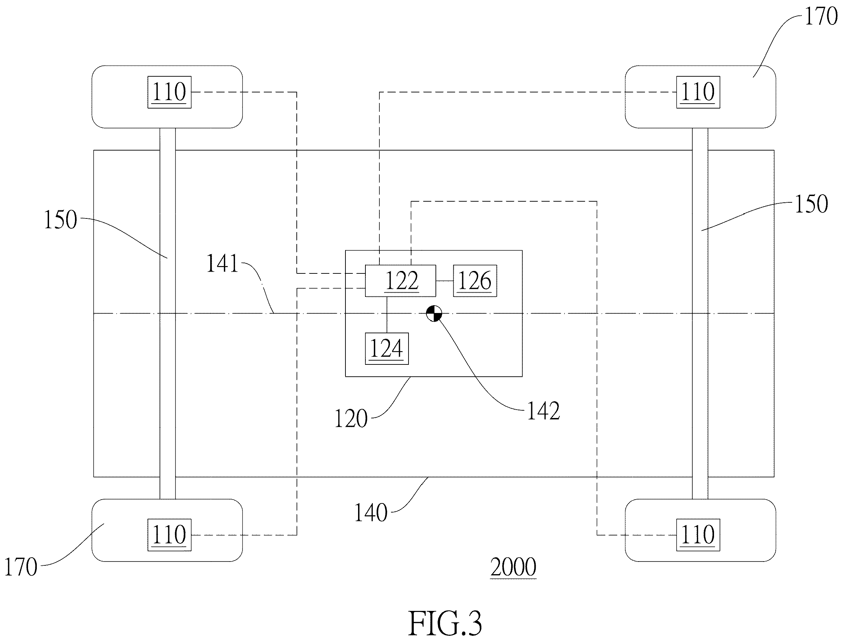

Please refer to FIG. 3, FIG. 3 illustrates a schematic view of a vehicle chassis status detecting system 2000 according to another embodiment of the present disclosure. As shown in FIG. 3, the difference between the vehicle chassis status detecting system 2000 and the vehicle chassis status detecting system 1000 is that the vehicle chassis status detecting system 2000 can perform offline calculations. That is, the vehicle chassis status detecting system 2000 can generate the detecting data on the vehicle. The vehicle chassis status detecting system 2000 does not need to upload the detecting data to the data center 200, the cloud or the factory. The second detecting device 120 additionally includes a processing module 126. The processing module 126 is coupled to the second transmission module 122 and is configured to generate the calculating result or a warning message based on the first acceleration data and the second acceleration data. The calculating result or the warning message may be the shock absorber abnormal signal, the shock absorber normal signal, the vehicle width gap abnormal signal, the vehicle width gap normal signal, the vehicle length gap abnormal signal and/or the vehicle length gap normal signal. The processing module 126 is coupled or communicatively connected to a display device (not shown) of the vehicle 100 to display the warning message. The display device may be a screen or a dashboard. For example, the calculating result of the processing module 126 may be associated with the status of the component corresponding to the vehicle 100, and the vehicle condition message may be related to whether to perform an inspection on the component or not.

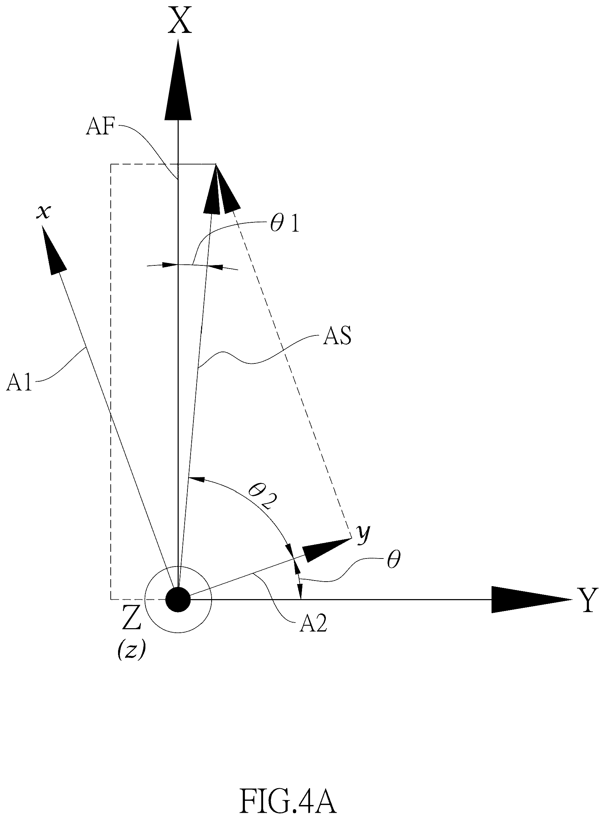

Please refer to FIG. 4A, FIG. 4A illustrates a schematic view that the first detecting device 110 detects an acceleration according to one embodiment of the present disclosure. The first detecting device 110 is disposed at the rim cover center position 181 of the rim cover 180. The first detecting device 110 includes the first accelerometer 114 and the gyroscope. The first detecting axis x of the first accelerometer 114 is set to the direction from the bottom to the roof of the vehicle (such as the gravity-related direction). The second detecting axis y is set to the vehicle length direction. The third detecting axis z is set in the vehicle width direction and corresponds to the axis center of the wheel axle 150. The three detecting axes of the gyroscope have the same direction as the first accelerometer 114. In other words, the first detecting axis x, the second detecting axis y, and the third detecting axis z are respectively parallel to the first reference axis X, the second reference axis Y, and the third reference axis Z. In FIG. 4A, the first axial acceleration A1 may be obtained according to the first detecting axis x and the second axial acceleration A2 may be obtained according to the second detecting axis y, and the oblique acceleration AS may be calculated according to Pythagorean theorem. The rotation angle θ of the ring tire structure T is measured by the gyroscope. There is a second angle θ2 between the second axial acceleration A2 and the oblique acceleration AS. There is a first angle θ1 between the oblique acceleration AS and the first reference axis X. When the rotation angle θ is not a multiple of 90 degrees, the effective acceleration AF in the gravity-related direction can be calculated according to the following formulas: θ2 = tan⁻¹ (A2/A1); θ1 = (90 °-θ-θ2); and AF = AS*cos(θ1). It is noted that the above principles for calculating the effective acceleration AF can also be applied to the calculation of the effective speed and the effective displacement in the gravity-related direction.

When the rotation angle θ is an odd multiple of 90 degrees, the effective acceleration AF in the gravity-related direction is the second axial acceleration A2 measured by the second detecting axis y. When the rotation angle θ is an even multiple of 90 degrees, the effective acceleration AF in the gravity-related direction is the first axial acceleration A1 measured by the first detecting axis x. Therefore, the effective acceleration AF in the gravity-related direction aforementioned is the acceleration data in the first gravity-related direction. Moreover, the acceleration data measured by the third detecting axis z is the acceleration data in the first vehicle width direction.

Similarly, the aforementioned method of obtaining the effective acceleration AF in the gravity-related direction may be used to obtain the acceleration data in the first vehicle length direction. The difference is that the acceleration data in the vehicle length direction is used to be calculated when calculating the acceleration data in the first vehicle length direction, so it will not be described again.

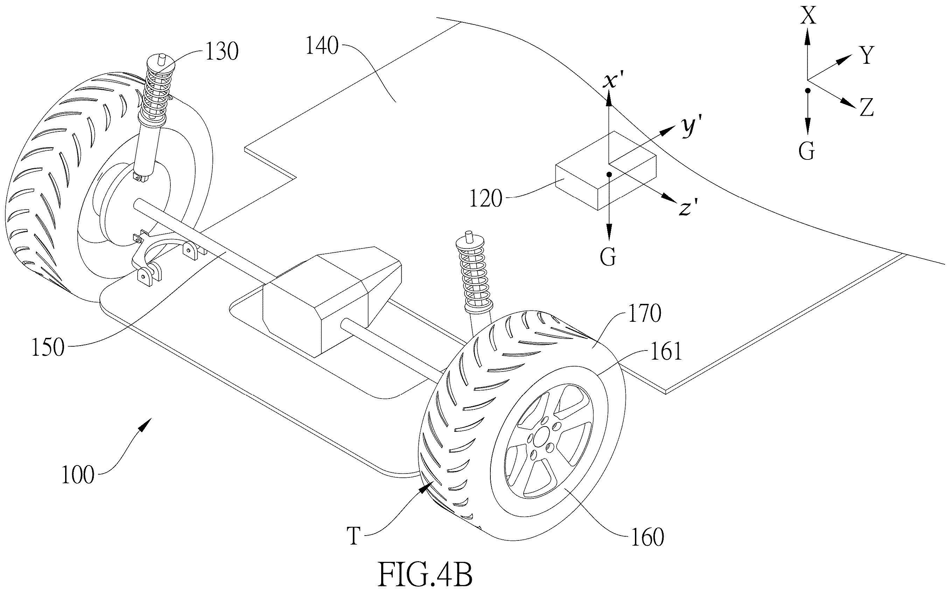

Please refer to FIG. 4B, FIG. 4B illustrates a schematic view that the second detecting device 120 detects an acceleration according to one embodiment of the present disclosure. The second detecting device 120 is located at the chassis center position 142 on the chassis center axis 141 of the chassis body 140. The second detecting device 120 includes the second accelerometer 124. The first detecting axis x' of the second accelerometer 124 is set to the direction from the bottom to the roof of the vehicle (such as the gravity-related direction). The second detecting axis y' is set to the vehicle length direction. The third detecting axis z' is set to the vehicle width direction. Therefore, the second detection device 120 can obtain the acceleration data in the second gravity-related direction, the acceleration data in the second vehicle width direction, and the acceleration data in the second vehicle length direction through the first detecting axis x', the second detecting axis y', and the third detecting axis z' of the second accelerometer 124.

Therefore, as mentioned above, the second detecting device 120 or the data center 200 respectively compares the acceleration data in the first gravity-related direction, the speed data in the first gravity-related direction, and/or the displacement data in the first gravity-related direction with the acceleration data in the second gravity-related direction, the speed data in the second gravity-related direction, and/or the displacement data in the second gravity-related direction at the same time-interval to obtain an acceleration difference value in the gravity-related direction and a speed difference value in the gravity-related direction and/or a displacement difference value in the gravity-related direction. When the acceleration difference value in the gravity-related direction, the speed difference value in the gravity-related direction, and/or the displacement difference value in the gravity-related direction are respectively greater than a predetermined acceleration threshold in the gravity-related direction, a predetermined speed threshold in the gravity-related direction, and/or a predetermined displacement threshold in the gravity-related direction, the shock absorber 130 is determined not to be operated properly and an abnormal signal of the shock absorber signal is generated. When the acceleration difference value of the gravity-related direction are less than or equal to the predetermined acceleration threshold of the gravity-related direction, the shock absorber 130 is determined to be operated properly and a normal signal of the shock absorber signal is generated.

Therefore, as mentioned above, the second detecting device 120 or the data center 200 compares the acceleration data in the first vehicle width direction, the speed data in the first vehicle width direction, and/or the displacement data in the first vehicle width direction with the acceleration data in the second vehicle width direction, the speed data in the second vehicle width direction, and/or the displacement data in the second vehicle width direction at the same time-interval to obtain an acceleration difference value in a vehicle width direction, a speed difference value in the vehicle width direction, and/or a displacement difference value in the vehicle width direction. When the acceleration difference value in the vehicle width direction, the speed difference value in the vehicle width direction, and/or the displacement difference value in the vehicle width direction are greater than a predetermined acceleration threshold in the vehicle width direction, a predetermined speed threshold in the vehicle width direction, and/or a predetermined displacement threshold in the vehicle width direction, a width gap between the chassis body 140 and the tire structure T is determined too large and an abnormal signal of the vehicle width gap signal is generated. When the acceleration difference value in the vehicle width direction, the speed difference value in the vehicle width direction, and/or the displacement difference value in the vehicle width direction are less than or equal to the predetermined acceleration threshold in the vehicle width direction, the predetermined speed threshold in the vehicle width direction, and/or the predetermined displacement threshold in the vehicle width direction, the width gap between the chassis body 140 and the tire structure T is determined within an allowable range and a normal signal of the vehicle width gap signal is generated.

Therefore, as mentioned above, the second detecting device 120 or the data center 200respectively compares the acceleration data in the first vehicle length direction, the speed data in the first vehicle length direction, and/or the displacement data in the first vehicle length direction with the acceleration data in the second vehicle length direction, the speed data in the second vehicle length direction, and/or the displacement data in the second vehicle length direction at the same time-interval to obtain an acceleration difference value in a vehicle length direction, a speed difference value in the vehicle length direction, and/or a displacement difference value in the vehicle length direction. When the acceleration difference value in the vehicle length direction, the speed difference value in the vehicle length direction, and/or the displacement difference value in the vehicle length direction are greater than a predetermined acceleration threshold in the vehicle length direction, a predetermined speed threshold in the vehicle length direction, and/or a predetermined displacement threshold in the vehicle length direction, a length gap between the chassis body 140 and the tire structure T is determined too large and an abnormal signal of the vehicle length gap signal is generated. When the acceleration difference value in the vehicle length direction, the speed difference value in the vehicle length direction, and/or the displacement difference value in the vehicle length direction are less than or equal to the predetermined acceleration threshold in the vehicle length direction, the predetermined speed threshold in the vehicle length direction, and/or the predetermined displacement threshold in the vehicle length direction, the length gap between the chassis body 140 and the tire structure T is determined within an allowable range and a normal signal of the vehicle length gap signal is generated.

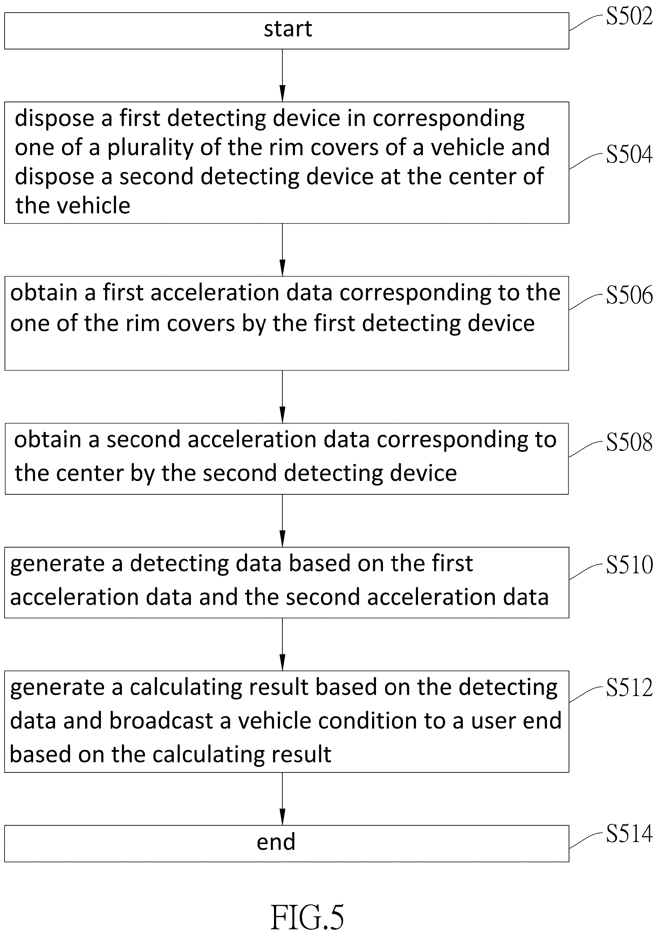

Please refer to FIG. 5, FIG. 5 illustrates a flow chart of a vehicle condition detecting method according to one embodiment of the present disclosure. Please note that these steps do not necessarily need to be performed in the order shown in FIG. 5, if the same result can be obtained substantially. The method shown in FIG. 5 can be adopted by the vehicle chassis status detecting system 1000 shown in FIG. 1A and FIG. 1B. In step 502, the process starts. In step 504, a first detecting device is disposed in corresponding one of a plurality of the rim covers of a vehicle and a second detecting device is disposed at the center of the vehicle. In step 506, a first acceleration data corresponding to the one of the rim covers is obtained by the first detecting device. In step 508, a second acceleration data corresponding to the center is obtained by the second detecting device. In step 510, a detecting data is generated based on the first acceleration data and the second acceleration data. In step 512, a calculating result is generated based on the detecting data and a vehicle condition is broadcasted to a user end based on the calculating result. In step 514, the process ends. During operation, the details of each step in FIG. 5 can be understood based on the aforementioned vehicle chassis status detecting system. For the sake of simplicity, further description will be omitted here.

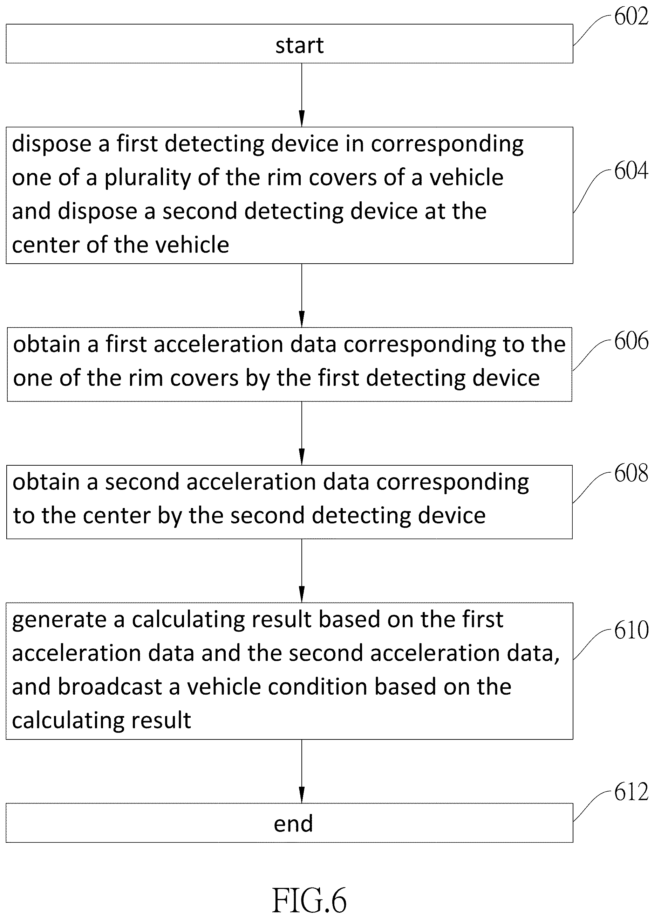

Please refer to FIG. 6, FIG. 6 illustrates a flow chart of a vehicle condition detecting method according to another embodiment of the present disclosure. Please note that these steps do not necessarily need to be performed in the order shown in FIG. 6, if the same result can be obtained substantially. The method shown in FIG. 6 can be adopted by the vehicle chassis status detecting system 2000 shown in FIG. 3. In step 602, the process starts. In step 604, a first detecting device is disposed in corresponding one of a plurality of the rim covers of a vehicle and a second detecting device is disposed at the center of the vehicle. In step 606, a first acceleration data corresponding to the one of the rim covers is obtained by the first detecting device. In step 608, a second acceleration data corresponding to the center is obtained by the second detecting device. In step 610, a calculating result is generated based on the first acceleration data and the second acceleration data, and a vehicle condition is broadcasted based on the calculating result. In step 612, the process ends. During operation, the details of each step in FIG. 6 can be understood based on the aforementioned vehicle chassis status detecting system. For the sake of simplicity, further description will be omitted here.

In summary, the present disclosure detects acceleration changes of the rim, the tire, the tire structure or the rim cover relative to the chassis body to determine whether vehicle components or consumables need to be replaced or not. For example, when the calculating result shows that the acceleration changes of the rim, the tire, the tire structure or the rim cover are abnormal, it is likely that there is a problem with the performance of the shock absorbers (such as the shock absorber abnormal signal), or there is a problem between the chassis body and the tire structure (such as the vehicle width abnormal signal and the vehicle length abnormal signal). The size of the gap between the chassis is abnormal and the chassis components may need to be adjusted or replaced. So, the user may receive a notification to arrange for a repair and maintenance inspection. In this way, if the vehicle accessories are damaged, the driver is able to receive the notification beforehand and does not have to wait until the scheduled maintenance date to replace the damaged accessories. Therefore, the present disclosure can improve driving safety on the road.

While the present disclosure has been described by way of example and in terms of preferred embodiment, it is to be understood that the present disclosure is not limited thereto. In addition, any embodiments of the present disclosure do not necessarily achieve all the purposes, advantages or features disclosed in the present disclosure. Although the present disclosure has been disclosed above through the embodiments, they are not intended to limit the present disclosure. Any person with ordinary skill in the art may make some modifications without departing from the spirit and scope of the present disclosure. Therefore, the protective scope of the present disclosure shall be determined by the appended claims.

## Claims

1. A vehicle chassis status detecting system used for an automobile (100), a chassis system of the automobile (100) comprising a chassis body (140) and a tire structure (T), the tire structure (T) connected to an axle (150) of the chassis body (140), the axle (150) of the chassis body (140) disposed above the chassis body (140) and one end of the axle (150) connected to the chassis body (140), a rim (160) of the tire structure (T) disposed at another end of the axle (150), an outer peripheral surface of the rim (160) combined with a tire (170) to form the tire structure (T), a central hole (161) located at a center of the rim (160) and a rim cover (180) disposed in the central hole (161) of the center of the rim (160), the rim cover (180) rotated synchronously with the rotation of the rim (160) or the tire (170), a shock absorber (130) of the chassis body (140) connected to the axle (150), and the vehicle chassis status detecting system comprising:
a first detecting device (110), disposed at a rim cover center position (181) of the rim cover (180) of the tire structure (T), wherein the first detecting device (110) comprises a first accelerometer (114) and a first transmission module (112), the first accelerometer (114) is electrically coupled to the first transmission module (112), and the first detecting device (110) is configured to use the first accelerometer (114) to obtain a first acceleration data of the tire structure (T); and
a second detecting device (120), disposed in the chassis body (140), wherein the second detecting device (120) comprises a second accelerometer (124) and a second transmission module (122), the second transmission module (122) is electrically coupled to the second accelerometer (124) and is communicatively connected to the first transmission module (112), and the second detecting device (120) is configured to use the second accelerometer (124) to obtain a second acceleration data of the chassis body (140);
wherein the first acceleration data is transmitted to the second transmission module (122) through the first transmission module (112), the second detecting device (120) is configured to compare the second acceleration data with the first acceleration data at the same time-interval to obtain an acceleration difference value, and the acceleration difference value is compared with a predetermined acceleration threshold to generate a shock absorber signal, a vehicle width gap signal, and/or a vehicle length gap signal.

2. The vehicle chassis status detecting system of claim 1, wherein the first acceleration data comprises an acceleration data of a first gravity-related direction, an acceleration data of a first vehicle width direction, and/or an acceleration data of a first vehicle length direction of the first detecting device (110), and the second acceleration data comprises an acceleration data of a second gravity-related direction, an acceleration data of a second vehicle width direction, and/or an acceleration data of a second vehicle length direction of the second detecting device (120).

3. The vehicle chassis status detecting system of claim 2, wherein the second detecting device (120) is configured to compare the acceleration data of the first gravity-related direction with the acceleration data of the second gravity-related direction at the same time-interval to obtain an acceleration difference value of a gravity-related direction, and when the acceleration difference value of the gravity-related direction are greater than a predetermined acceleration threshold of the gravity-related direction, the shock absorber (130) is determined not to be operated properly and an abnormal signal of the shock absorber signal is generated;
wherein when the acceleration difference value of the gravity-related direction are less than or equal to the predetermined acceleration threshold of the gravity-related direction, the shock absorber (130) is determined to be operated properly and a normal signal of the shock absorber signal is generated.

4. The vehicle chassis status detecting system of claim 2, wherein the second detecting device (120) compares the acceleration data in the first vehicle width direction with the acceleration data in the second vehicle width direction at the same time-interval to obtain an acceleration difference value in a vehicle width direction, and when the acceleration difference value in the vehicle width direction are greater than a predetermined acceleration threshold in the vehicle width direction, a width gap between the chassis body (140) and the tire structure (T) is determined too large and an abnormal signal of the vehicle width gap signal is generated;
wherein when the acceleration difference value in the vehicle width direction are less than or equal to the predetermined acceleration threshold in the vehicle width direction, the width gap between the chassis body (140) and the tire structure (T) is determined within an allowable range and a normal signal of the vehicle width gap signal is generated.

5. The vehicle chassis status detecting system of claim 2, wherein the second detecting device (120) compares the acceleration data of the first vehicle length direction with the acceleration data of the second vehicle length direction at the same time-interval to obtain an acceleration difference value of a vehicle length direction, when the acceleration difference value of the vehicle length direction are greater than a predetermined acceleration threshold of the vehicle length direction, a length gap between the chassis body (140) and the tire structure (T) is determined too large and an abnormal signal of the vehicle length gap signal is generated;
wherein when the acceleration difference value of the vehicle length direction are less than or equal to the predetermined acceleration threshold of the vehicle length direction, the length gap between the chassis body (140) and the tire structure (T) is determined within an allowable range and a normal signal of the vehicle length gap signal is generated.

6. The vehicle chassis status detecting system of claim 1, wherein the first detecting device (110) and/or the second detecting device (120) are configured to integrate the first acceleration data and/or the second acceleration data to obtain a first speed data, a second speed data, a first displacement data, and/or a second displacement data, and the first acceleration data, the first speed data, and/or the first displacement data obtained by the first detecting device (110) are transmitted to the second detecting device (120).

7. The vehicle chassis status detecting system of claim 6, wherein the second detecting device (120) is configured to correspondingly compare the second acceleration data, the second speed data, and/or the second displacement data with the first acceleration data, the first speed data, and/or the first displacement data at the same time-interval to obtain an acceleration difference value, a speed difference value, and/or a displacement difference value respectively, and the second detecting device (120) is configured to compare the acceleration difference value, the speed difference value, and/or the displacement difference value with a predetermined acceleration threshold, a predetermined speed threshold, and/or a predetermined displacement threshold to generate the shock absorber signal, the vehicle width gap signal, and/or the vehicle length gap signal.

8. The vehicle chassis status detecting system of claim 7, wherein the first acceleration data comprises an acceleration data of a first gravity-related direction, an acceleration data of a first vehicle width direction, and/or an acceleration data of a first vehicle length direction of the first detecting device (110), the second acceleration data comprises a second gravity-related acceleration data, a second vehicle width direction acceleration data and/or a second vehicle length direction of the second detecting device (120);
wherein the first speed data comprises a speed data of a first gravity-related direction, a speed data of a first vehicle width direction, and/or a speed data of a first vehicle length direction;
wherein the second speed data comprises a speed data of a second gravity-related direction, a speed data of a second vehicle width direction, and/or a speed data of a second vehicle length direction;
wherein the first displacement data comprises a displacement data of a first gravity-related direction, a displacement data of a first vehicle width direction, and/or a displacement data of a first vehicle length direction;
wherein the second displacement data comprises a displacement data of a second gravity-related direction, a displacement data of a second vehicle width direction, and/or a displacement data of a second vehicle length direction.

9. The vehicle chassis status detecting system of claim 8, wherein the second detecting device (120) is configured to correspondingly compare the acceleration data of the first gravity-related direction, the speed data of the first gravity-related direction, and/or the displacement data of the first gravity-related direction with the acceleration data of the second gravity-related direction, the speed data of the second gravity-related direction, and/or the displacement data of the second gravity-related direction at the same time-interval to obtain an acceleration difference value of a gravity-related direction, a speed difference value of the gravity-related direction, and/or a displacement difference value of the gravity-related direction, and when the acceleration difference value of the gravity-related direction, the speed difference value of the gravity-related direction, and/or the displacement difference value of the gravity-related direction are respectively greater than a predetermined acceleration threshold of the gravity-related direction, a predetermined speed threshold of the gravity-related direction, and/or a predetermined displacement threshold of the gravity-related direction, the shock absorber (130) is determined not to be operated properly and an abnormal signal of the shock absorber signal is generated;
wherein when the acceleration difference value of the gravity-related direction, the speed difference value of the gravity-related direction, and/or the displacement difference value of the gravity-related direction are respectively less than or equal to the predetermined acceleration threshold of the gravity-related direction, the predetermined speed threshold of the gravity-related direction, and/or the predetermined displacement threshold of the gravity-related direction, the shock absorber (130) is determined to be operated properly, and a normal signal of the shock absorber signal is generated.

10. The vehicle chassis status detecting system of claim 8, wherein the second detecting device (120) is configured to correspondingly compare the acceleration data in the first vehicle width direction, the speed data in the first vehicle width direction, and/or the displacement data in the first vehicle width direction with the acceleration data in the second vehicle width direction, the speed data in the second vehicle width direction, and/or the displacement data in the second vehicle width direction at the same time-interval to obtain an acceleration difference value in a vehicle width direction, a speed difference value in the vehicle width direction, and/or a displacement difference value in the vehicle width direction, and when the acceleration difference value in the vehicle width direction, the speed difference value in the vehicle width direction, and/or the displacement difference value in the vehicle width direction are respectively greater than a predetermined acceleration threshold in the vehicle width direction, a predetermined speed threshold in the vehicle width direction, and/or a predetermined displacement threshold in the vehicle width direction, a width gap between the chassis body (140) and the tire structure (T) is determined too large and an abnormal signal of the vehicle width gap signal is generated;
wherein when the acceleration difference value in the vehicle width direction, the speed difference value in the vehicle width direction, and/or the displacement difference value in the vehicle width direction are respectively less than or equal to the predetermined acceleration threshold in the vehicle width direction, the predetermined speed threshold in the vehicle width direction, and/or the predetermined displacement threshold in the vehicle width direction, the width gap between the chassis body (140) and the tire structure (T) is determined within an allowable range and a normal signal of the vehicle width gap signal is generated.

11. The vehicle chassis status detecting system of claim 8, wherein the second detecting device (120) is configured to correspondingly compare the acceleration data of the first vehicle length direction, the speed data of the first vehicle length direction, and/or the displacement data of the first vehicle length direction with the acceleration data of the second vehicle length direction, the speed data of the second vehicle length direction, and/or the displacement data of the second vehicle length direction at the same time-interval to obtain an acceleration difference value of a vehicle length direction, a speed difference value of the vehicle length direction, and/or a displacement difference value of the vehicle length direction, and when the acceleration difference value of the vehicle length direction, the speed difference value of the vehicle length direction, and/or the displacement difference value of the vehicle length direction are respectively greater than a predetermined acceleration threshold of the vehicle length direction, a predetermined speed threshold of the vehicle length direction, and/or a predetermined displacement threshold of the vehicle length direction, a length gap between the chassis body (140) and the tire structure (T) is determined too large and an abnormal signal of the vehicle length gap signal is generated;
wherein when the acceleration difference value of the vehicle length direction, the speed difference value of the vehicle length direction, and/or the displacement difference value of the vehicle length direction are respectively less than or equal to the predetermined acceleration threshold of the vehicle length direction, the predetermined speed threshold of the vehicle length direction, and/or the predetermined displacement threshold of the vehicle length direction, the length gap between the chassis body (140) and the tire structure (T) is determined within an allowable range and a normal signal of the vehicle length gap signal is generated.

12. The vehicle chassis status detecting system of claim 1, further comprising:
a data center (200), comprising a third communicating module (220), wherein the third communicating module (220) is communicatively connected to the second transmission module (122) to receive a detecting data from the second detecting device (120), and the detecting data comprises the first acceleration data and the second acceleration data.

13. The vehicle chassis status detecting system of claim 12, wherein the data center (200) further comprises a computing module (230), the computing module (230) is coupled to the third communicating module (220), the computing module (230) comprises an artificial intelligence computing unit (232), the artificial intelligence computing unit (232) is configured to be trained according to a vehicle driving data, and the vehicle driving data is a statistical data of a predetermined driving number of a specific car in a specific venue, the statistical data comprises the first acceleration data and the second acceleration data, and the artificial intelligence computing unit (232) is configured to generate a training result after completing the training.

14. The vehicle chassis status detecting system of claim 13, wherein the training result is the predetermined acceleration threshold.

15. The vehicle chassis status detecting system of claim 1, wherein the second detecting device (120) is disposed at a chassis center position (142) on a chassis center axis (141) of the chassis body (140).

16. A vehicle chassis status detecting system used for an automobile (100), a chassis system of the automobile (100) comprising a chassis body (140) and a tire structure (T), the tire structure (T) connected to an axle (150) of the chassis body (140), the axle (150) of the chassis body (140) disposed above the chassis body (140) and one end of the axle (150) connected to the chassis body (140), a rim (160) of the tire structure (T) disposed at another end of the axle (150), an outer peripheral surface of the rim (160) combined with a tire (170) to form the tire structure (T), a central hole (161) located at a center of the rim (160) and a rim cover (180) disposed in the central hole (161) of the center of the rim (160), the rim cover (180) rotated synchronously with the rotation of the rim (160) or the tire (170), a shock absorber (130) of the chassis body (140) connected to the axle (150), and the vehicle chassis status detecting system comprising:
a first detecting device (110), disposed at a rim cover center position (181) of the rim cover (180) of the tire structure (T), wherein the first detecting device (110) comprises a first accelerometer (114) and a first transmission module (112), the first accelerometer (114) is electrically coupled to the first transmission module (112), and the first detecting device (110) is configured to use the first accelerometer (114) to obtain a first acceleration data of the tire structure (T);
a second detecting device (120), disposed in the chassis body (140), wherein the second detecting device (120) comprises a second accelerometer (124) and a second transmission module (122), the second transmission module (122) is electrically coupled to the second accelerometer (124) and is communicatively connected to the first transmission module (112), and the second detecting device (120) is configured to use the second accelerometer (124) to obtain a second acceleration data of the chassis body (140); and
a data center (200), comprising a third communicating module (220), wherein the third communicating module (220) is communicatively connected to the second transmission module (122) to receive a detecting data from the second detecting device (120), the detecting data comprises the first acceleration data and the second acceleration data, a computing module (230) is coupled to the third communicating module (220), and the computing module (230) is configured to process the detecting data;
wherein the computing module (230) compares the second acceleration data with the first acceleration data at the same time-interval to obtain an acceleration difference value and compares the acceleration difference value with a predetermined acceleration threshold to generate a shock absorber signal, a vehicle width gap signal, and/or a vehicle length gap signal.

17. The vehicle chassis status detecting system of claim 16, wherein the second detecting device (120) is disposed at a chassis center position (142) on a chassis center axis (141) of the chassis body (140).
